# EUROPÄISCHE PATENTSCHRIFT

(11) **EP 2 376 810 B1**
(45) Veröffentlichungstag und Bekanntmachung des Hinweises auf die Patenterteilung: **15.06.2016**
(21) Anmeldenummer: 09774633.3
(22) Anmeldetag: 09.12.2009
(51) Int. Cl.: F16H 57/08

(54) **GUSSTEIL, PLANETENTRÄGER, HOHLWELLE UND PLANETENGETRIEBE**
CAST PART, PLANET CARRIER,HOLLOW SHAFT,PLANETARY GEAR
PIÈCE MOULÉE,PORTE-SATELLITES,ARBRE CREUX,TRANSMISSION PLANETAIRE

(30) Priorität: 15.12.2008 DE 102008061902; 24.09.2009 DE 102009042585
(43) Veröffentlichungstag der Anmeldung: 19.10.2011
(60) Teilanmeldung: 15002225.9
(73) Patentinhaber: SEW-EURODRIVE GmbH & Co. KG, 76646 Bruchsal (DE)
(72) Erfinder: GRIMM, Andreas, 76297 Stutensee (DE)
(86) Internationale Anmeldenummer: PCT/EP2009/008782
(87) Internationale Veröffentlichungsnummer: WO 2010/072330

(56) Entgegenhaltungen:
- EP-A1- 1 502 799
- EP-A2- 1 006 295
- EP-A2- 1 281 884
- EP-A2- 1 371 879
- DE-A1- 4 425 961
- DE-C1- 19 711 423
- DE-U1- 20 022 827
- JP-A- 58 077 952

## Beschreibung

Die Erfindung betrifft ein Gussteil, einen Planetenträger, ein Rohbauteil und ein Verfahren zur Herstellung eines Planetenträgers.

Aus der DE 23 05 780 ist ein Planetenträger und ein Planetengetriebe bekannt.

**Aus der** EP 1 006 295 A2 **ist ein einstückiger Planetenträger eines epizyklischen Getriebes bekannt.**

Der Erfindung liegt daher die Aufgabe zugrunde, ein Gussteil, einen Planetenträger, ein Rohbauteil und ein Verfahren zur Herstellung eines Planetenträgers weiterzubilden.

Erfindungsgemäß wird die Aufgabe bei dem Gussteil nach den in Anspruch 1 angegebenen Merkmalen gelöst, bei dem Planetenträger nach den in Anspruch 3 angegebenen Merkmalen, bei dem Rohbauteil nach dem in Anspruch 4 angegebenen Merkmalen, und bei dem Verfahren zur Herstellung eines Planetenträgers nach den in Anspruch 5 angegebenen Merkmalen gelöst.

Wichtige Merkmale bei dem Gussteil für einen einstückigen Planetenträger sind, dass das Gussteil einen Grundkörper umfasst, aus welchem ein Rohbolzen hervorsteht, wobei der Rohbolzen eine Form aufweist, aus welcher ein Bolzen für ein Planetenrad in verschiedenen Positionen auf dem Grundkörper fertigbar ist. Von Vorteil dabei ist, dass ein und dasselbe Gussteil aus derselben Gussform für Planetengetriebe mit unterschiedlichen Übersetzungen einsetzbar ist.

Bei der Ausgestaltung des Gussteils ist der Grundkörper scheibenförmig, und vorzugsweise annähernd dreieckig mit abgerundeten Ecken ausgeformt. Von Vorteil dabei ist, dass das Gussteil einfach herstellbar ist.

Bei der Ausgestaltung des Gussteils stehen die Rohbolzen annähernd senkrecht bis senkrecht vom Grundkörper ab. Von Vorteil dabei ist, dass die Rohbolzen einfach bearbeitbar sind.

Bei der Ausgestaltung des Gussteils weist der Rohbolzen eine ovale Grundfläche an seinem Ansatz zum Grundkörper auf. Von Vorteil dabei ist, dass ein Bolzen für ein Planetenrad in unterschiedlichen Positionen am Grundkörper aus dem Rohbolzen fertigbar ist.

Bei einer weiteren vorteilhaften Ausgestaltung des Gussteils ist der scheibenförmige Grundkörper annähernd dreieckig und weist in jeder Ecke einen Rohbolzen auf. Von Vorteil dabei ist, dass drei Bolzen aus dem Gussteil fertigbar sind.

Wichtige Merkmale bei dem Planetenträger für ein Planetengetriebe sind, dass der Planetenträger aus einem wie vorstehend beschriebenen Gussteil gefertigt ist. Von Vorteil dabei ist, dass mit ein und derselben Gussform Planetenträger für Planetengetriebe mit unterschiedlichen Übersetzungen fertigbar sind.

Bei einer vorteilhaften Ausgestaltung des Planetenträgers weist der Grundkörper eine zentrale kreisförmige Öffnung mit einer Innenverzahnung auf und ist um die kreisförmige Öffnung verdickt ausgeführt, und der Planetenträger weist annähernd in den Ecken des Grundkörpers senkrecht zum Grundkörper drei Bolzen für Planetenräder auf, welche aus den Rohbolzen in unterschiedlichen Abständen zum Zentrum der kreisförmigen Ausnehmung herstellbar sind. Von Vorteil dabei ist, dass ein Drehmoment sicher in unterschiedlichen Übersetzungsverhältnissen übertragbar ist.

Bei einer weiteren vorteilhaften Ausgestaltung des Rohbauteils für einen Planetenträger ist der Planetenträger einstückig ausgeführt und Bolzen für die Planetenräder stehen an einem Grundkörper ab, wobei die Bolzen in unterschiedlichen radialen Abständen zu einer Drehachse des Grundkörpers fertigbar sind, wobei bei einem minimalen Abstand des Bolzens zur Drehachse die Differenz aus einer größten radialen Ausdehnung des Grundkörpers und dem größten radialen Abstand des Bolzens zum Zentrum des Grundkörpers größer ist als der halbe Radius des Bolzens vorzugsweise als der Radius des Bolzens. Von Vorteil dabei ist, dass mit ein und derselben Gussform Planetenträger für Planetengetriebe mit unterschiedlichen Übersetzungen fertigbar sind.

Wichtige Merkmale bei dem Verfahren zur Herstellung eines Planetenträgers sind, dass aus einem in radialer Richtung zu einer Drehachse des Planetenträgers längsgestrecktem Rohbolzen, welcher sich in axialer Richtung erstreckt, ein Bolzen für ein Planetenrad spanabtragend gefertigt wird. Von Vorteil dabei ist, dass mit ein und derselben Gussform Planetenträger für Planetengetriebe mit unterschiedlichen Übersetzungen fertigbar sind.

Bei einer vorteilhaften Ausgestaltung des Verfahrens wird der radiale Abstand des Bolzens zur Drehachse im Rahmen des längsgestrecktem Rohbolzens gewählt. Von Vorteil dabei ist, dass mit ein und derselben Gussform Planetenträger für Planetengetriebe mit unterschiedlichen Übersetzungen fertigbar sind.

Bei einer weiteren vorteilhaften Ausgestaltung des Verfahrens wird in eine Zylindermantelfläche des Planetenträgers, welche eine zur Drehachse konzentrische Öffnung, insbesondere kreisförmige Öffnung, umgibt, eine Innenverzahnung eingebracht. Von Vorteil dabei ist, dass ein Drehmoment sicher übertragbar ist.

Ein erfindungsgemäßes Gussteil für einen einstückigen Planetenträger umfasst einen scheibenförmigen, annähernd dreieckigen Grundkörper, aus welchem annähernd senkrecht bis senkrecht zum scheibenförmigen, annähernd dreieckigen Grundkörper ein Rohbolzen hervorsteht, wobei der Rohbolzen eine Form aufweist, aus welcher Bolzen für ein Planetenrad in verschiedenen Positionen auf dem scheibenförmigen Grundkörper fertigbar sind. Von Vorteil ist dabei, dass aus mit der gleichen Gussform Planetenträger für Planetengetriebe mit verschiedenen Übersetzungen herstellbar sind.

Bei der Ausführungsform weist der Rohbolzen eine ovale Grundfläche auf. Von Vorteil ist dabei, dass Bolzen für die Planetenräder in unterschiedlichen Abständen zu einer zentralen Achse des Planetenträgers fertigbar sind.

Ein erfindungsgemäßer Planetenträger ist aus einem Gussteil mit einem scheibenförmigen annähernd dreieckigen Grundkörper und dazu senkrechten Rohbolzen gefertigt, wobei der Grundkörper eine zentrale kreisförmige Öffnung mit einer Innenverzahnung aufweist, und um die kreisförmige Öffnung verdickt ausgeführt ist,
und der Planetenträger weist annähernd in den Ecken des Grundkörpers drei Bolzen für Planetenträger auf, welche aus den Rohbolzen in unterschiedlichen Abständen zum Zentrum der kreisförmigen Ausnehmung herstellbar sind. Der Planetenträger weist somit eine vorteilhafte Geometrie auf, welche leichter und flexibler ist.

Weitere Vorteile ergeben sich aus den Unteransprüchen. Die Erfindung ist auf die Merkmalskombination der Ansprüche beschränkt. Für den Fachmann können sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe ergeben, die jedoch nicht zur Erfindung gehören.

Die Erfindung wird nun anhand von Ausführungsbeispielen mit Bezugnahme auf die Zeichnung näher erläutert. Es zeigen rein schematisch:
- Fig. 1: eine Explosionsdarstellung eines erfindungsgemäßen Planetengetriebes;
- Fig. 2: einen Schnitt durch zwei Ausführungsformen, wobei die obere Hälfte der Figur 2 das in Figur 1 gezeigte Planetengetriebe ohne Abdeckung und die untere Hälfte eine Ausführungsform mit Vollwelle zeigt;
- Fig. 3: eine Seitenansicht und eine Frontansicht einer weiteren Ausführungsform mit einer Vollwelle als Abtriebswelle und einem Stirnradgetriebe als Vorgetriebe;
- Fig. 4: eine Seitenansicht und eine Frontansicht einer weiteren Ausführungsform mit einer Hohlwelle als Abtriebswelle und einem Stirnradgetriebe als Vorgetriebe;
- Fig. 5: eine Seitenansicht und eine Frontansicht einer anderen Ausführungsformen mit einem Kegelradgetriebe als Vorgetriebe;
- Fig. 6: eine Draufsicht der in Figur 5 gezeigten Ausführungsform;
- Fig. 7: eine dreidimensionale Ansicht eines erfindungsgemäßen Planetenträgers;
- Fig. 8: eine teilweise Seitenansicht des in Figur 8 gezeigten Planetenträgers;
- Fig. 9: eine teilweise Frontansicht des in Figur 8 gezeigten Planetenträgers; und
- Fig. 10: einen Teilschnitt durch eine erfindungsgemäße Hohlwelle bzw. einen weiteren Planetenträger.

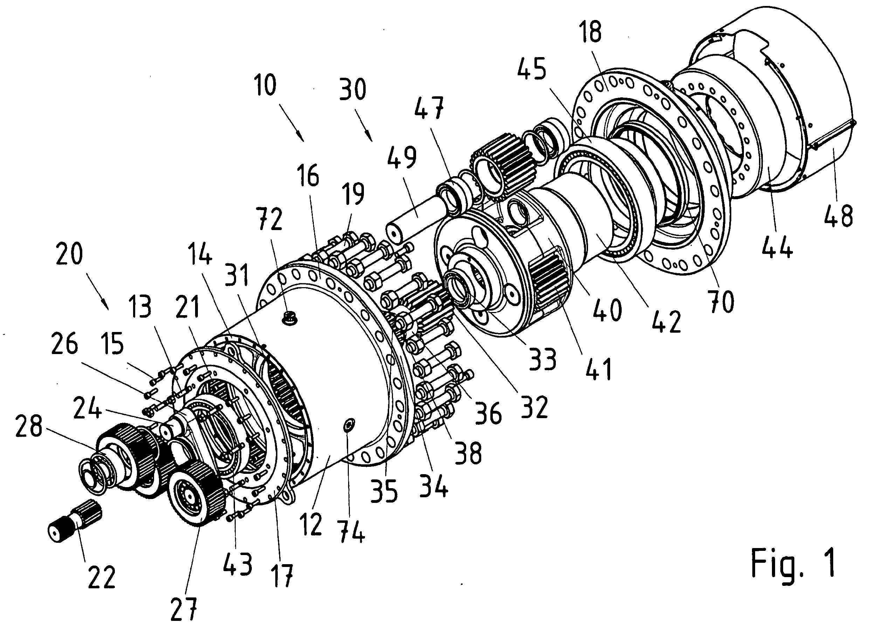

Figur 1 zeigt ein erfindungsgemäßes Planetengetriebe 10 in Explosionsdarstellung. Das Planetengetriebe 10 weist ein zentrales zylindermantelförmiges Gehäuseteil 12 auf. An einer eintriebseitigen Stirnseite des zentralen zylindermantelförmigen Gehäuseteils 12 ist mittels einer in eine Bohrung 14 in der Stirnwand befestigten Schraube 15 ein eintriebsseitiger Flansch 17 angeschraubt. Am eintriebsseitigen Flansch 17 ist eine Anbauschraube 13 angeordnet. Die Anbauschraube 13 dient zum Anbauen eines Vorgetriebes.

Abtriebsseitig ist das zentrale zylindermantelförmige Gehäuseteil 12 als Flansch 16 ausgeformt. An den Flansch 16 ist mittels einer weiteren Schraube 19 ein Abtriebsdeckel 18 angeschraubt. Das zentrale zylindermantelförmige Gehäuseteil 12 weist eine Entlüftung 72 und eine Verschlussschraube 74 auf.

Im zentrale zylindermantelförmige Gehäuseteil 12 ist eintriebsseitig eine erste Stufe 20 des Planetengetriebes 10 angeordnet. Eine Innenfläche des zentralen zylindermantelförmigen Gehäuseteils 12 ist in einem Teilbereich als Hohlrad 21 für die erste Stufe ausgebildet. Ein weiteres Sonnenrad 22 der ersten Stufe ragt aus dem zentralen zylindermantelförmigen Gehäuseteil 12 mit einem als Vielkeilverzahnung ausgeführten Endbereich heraus. Ein Verzahnungsbereich des weiteren Sonnenrades 22 kämmt mit einem Planetenrad 27. Das Planetenrad 27 ist auf Bolzen 24 eines Planetenträgers 26 der ersten Stufe 20 mittels eines Planetenradlagers 28 drehbar um eine Drehachse gelagert. Das Planetenradlager 28 ist durch entsprechende Sicherungsringe axial fixiert. Die erste Stufe 20 weist vorzugsweise drei Planetenräder auf.

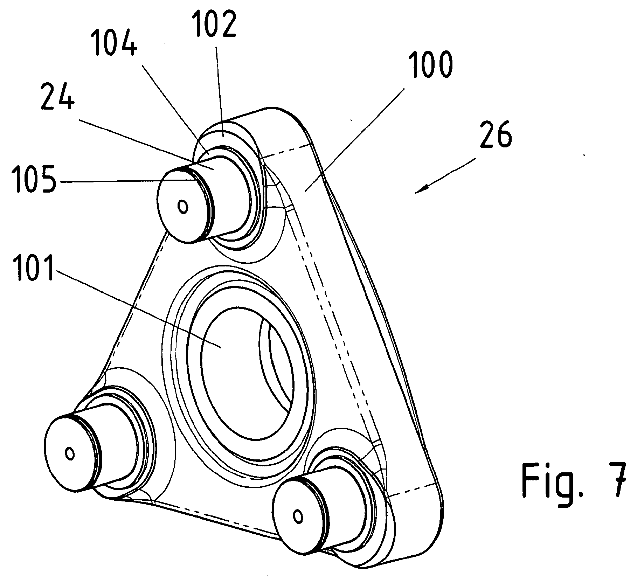

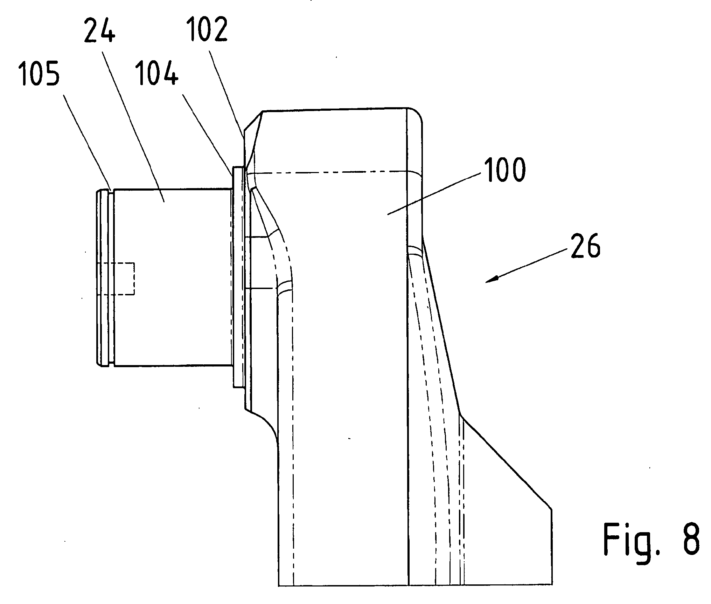

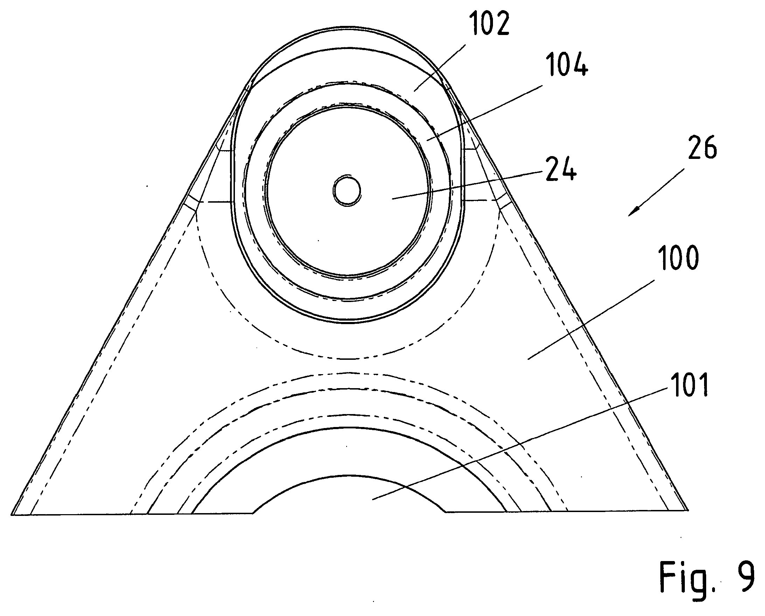

Die Figuren 7, 8 und 9 zeigen den Planetenträger 26 der ersten Stufe 20 im Detail. Der Planetenträger 26 der ersten Stufe 20 weist einen Grundkörper 100 auf, welcher vorzugsweise scheibenförmig ausgebildet ist. Mit scheibenförmig ist hier lediglich gemeint, dass der Grundkörper 100 in Bezug auf seine Ausdehnung in einer Ebene dünn ausgebildet ist, d.h. die Ausdehnung in Richtung der Drehachse ist kleiner als die Ausdehnung in einer Ebene senkrecht zur Drehachse.

Vom Grundkörper 100 stehen nach dem Giessprozess Rohbolzen in axialer Richtung hervor. Die Rohbolzen weisen eine Form auf, so dass ein Bolzen für ein Planetenrad in verschiedenen Positionen auf dem Grundkörper fertigbar ist.

Die Rohbolzen zeigen aus axialer Blickrichtung eine in radialer Richtung ovalförmig verlängerte Grundfläche 102 am Ansatz zum Grundkörper. Die Form des Rohbolzens ist bis auf die nötige Formschräge, bedingt durch den Giessprozess, als Zylinder mit der Grundfläche 102 als Basis gebildet. Die Stirnfläche des freistehenden Endes des Rohbolzens ist ebenso bedingt durch den Giessprozess konvex gekrümmt.

Aus den Rohbolzen lassen sich die Bolzen 24 in verschiedenen radialen Abständen zu einer zentralen Achse des Planetengetriebes 10 ausbilden. Vorzugsweise wird der Bolzen 24 aus dem Rohbolzen durch ein spanabtragendes Verfahren, wie zum Beispiel Drehen oder Fräsen herausgebildet.

Vorzugsweise ist der Bolzen 24 aus dem Rohbolzen in zwei Arbeitsschritten mit kleiner werdendem Durchmesser spannend gefertigt. Dadurch entsteht abgesetzt von der Grundfläche 102 eine Anschlagfläche 104. Am freistehenden Endbereich des Bolzens ist eine Sicherungsnut 105 eingebracht. Zwischen einem Sicherungsring, welcher in der Sicherungsnut 105 eingebracht ist und der Anschlagsfläche 104 ist ein innenring des Planetenradlagers 28 für das Planetenrad 27 wohldefiniert montierbar.

Der Rohbolzen kann aber auch zum Beispiel eine dreieckige Grundfläche aufweisen. So lassen sich die Bolzen auch in Umfangsrichtung in verschiedenen Positionen fertigen.

Der Grundkörper 100 ist vorzugsweise als ein annähernd gleichschenkliges Dreieck mit einer zentralen kreisförmigen Ausnehmung 101 ausgeführt.

Vorzugsweise ist in jeder Ecke des als gleichschenkliges Dreieck ausgeführten scheibenförmigen Grundkörpers 100 ein Rohbolzen angeformt. Durch die spezielle Ausbildung der Rohbolzen am Gussteil kann aus dem gleichen Gussteil ein Planetenträger 26 für verschiedene Übersetzungen der erste Stufe 20 gefertigt werden, da bei gleichem weiteren Sonnenrad 22 Planetenräder 27 mit unterschiedlichen Durchmessern montierbar sind.

Die Variabilität der Position des Bolzen 24 auf dem Grundkörper 100 ist so groß, dass bei einem minimalen radialen Abstand des Bolzen 24 zur zentralen Drehachse des Planetenträgers 26 der Grundkörper soweit über den Bolzen in radialer Richtung hinausragt, dass ein minimaler Abstand zwischen dem maximalen Abstand der Umfangsfläche des Grundkörpers und der Umfangsfläche des Bolzens 24 grösser ist als der Durchmesser des Bolzens 24 oder zumindest der Radius Bolzen 24.

Das bei minimalem radialem Abstand des Bolzens 24 überschüssige Material des Grundkörpers 100 führt zu einem ruhigeren Lauf des Planetenträgers 26.

Bei einer alternativen Ausführungsform des Planetenträgers 26 ist direkt an den Planetenträger 26 eine Abtriebswelle angegossen. Die Abtriebswelle ist vorzugsweise als Hohlwelle ausgeführt. Die Hohlwelle weist eine spiralförmig umlaufende Nut in einer innen liegenden Zylindermantelfläche auf, wie bei der gezeigten Ausführungsform des weiteren Planetenträgers 40.

Bei einem Verfahren zu Herstellung des Planetenträgers 26 wird zuerst der Grundkörper mit den Rohbolzen gegossen. Dann wird der radiale Abstand des Bolzens 24 zur zentralen Drehachse des Planetenträgers 26 festgelegt und der Bolzen 24 entsprechend aus dem Rohbolzen herausgearbeitet. Dabei wird zuerst mit einem größeren Durchmesser als dem Durchmesser des Bolzens bis auf eine Grundfläche 102 am Ansatz des Bolzens 26 zum Grundkörper Material des Rohbolzens abgetragen.

Anschließend wird der Bolzen mit dem endgültigen Durchmesser gefertigt. Dabei entsteht abgestuft zur Grundfläche 102 die Anschlagsfläche 104. Das freistehende Ende des Rohbolzens wird plan abgestochen und vorzugsweise wird eine zentrale Bohrung als Sackloch oder Durchgangsbohrung in den Bolzen 26 eingebracht.

Weiter wird in eine Zylindermantelfläche des Planetenträgers 26, welche vom Grundkörper 100 umfasst wird, und eine zur Drehachse des Planetenträgers 26 konzentrische Öffnung umgibt, eine innenverzahnung eingebracht insbesondere eingefräst. Die Öffnung ist vorzugsweise kreisförmig. Alternative Ausführungsformen weisen eine ovale oder andersförmige Öffnung auf, welche eine formschlüssige, drehfeste Verbindung mit Teilen, welche mit dem Planetenträger verbunden werden sollen, wie zum Beispiel ein Sonnenrad 32 der zweiten Stufe, ermöglichen.

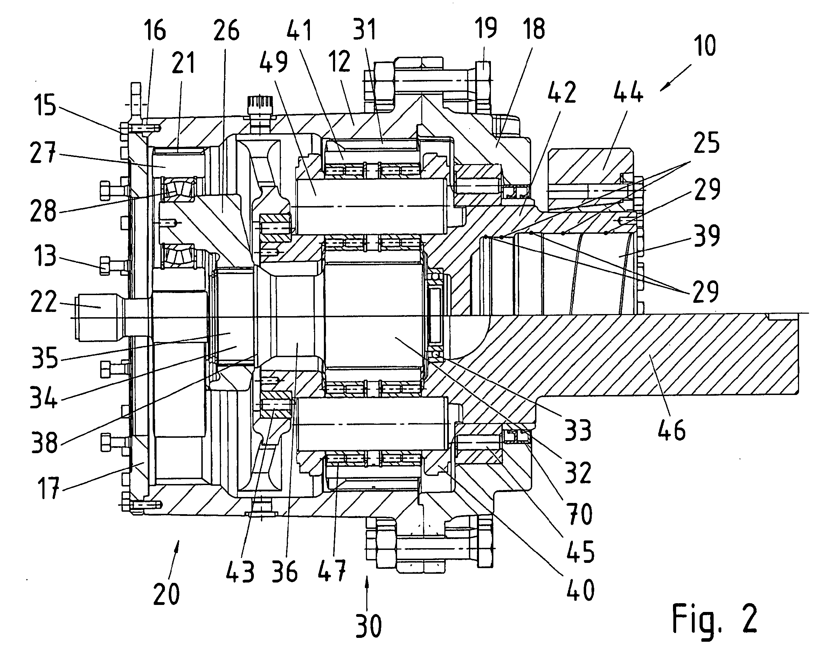

Wie in den Figuren 1 und 2 gezeigt ist abtriebsseitig im zentralen zylindermantelförmigen Gehäuseteil 12 eine zweite Stufe 30 angeordnet. In der Innenfläche des zentralen zylindermantelförmigen Gehäuseteils 12 ist ein Hohlrad 31 für die zweite Stufe 30 ausgebildet. Ein Sonnenrad 32 der zweiten Stufe 30 weist eine durchgehend gefertigte Verzahnung auf, d.h. die Zähne der verschiedenen Verzahnungsbereiche liegen in einer Flucht. Die durchgehende Verzahnung des Sonnenrads 32 der zweiten Stufe 30 ist in einem mittleren Bereich 36 des Sonnerads 32 der zweiten Stufe 30 durch eine Art Freistich unterbrochen.

Ein eintriebsseitiger Endbereich 34 des Sonnenrads 32 der zweiten Stufe 30 weist in einem Teilbereich 35 eine verkürzten Verzahnung und somit einen verkleinerten
Kopfkreisdurchmesser auf. Mit diesem Teilbereich 35 greift das Sonnenrad 32 der zweiten Stufe 30 in den Planetenträger 26 der ersten Stufe ein. Der Planetenträger 26 der ersten Stufe 20 weist dafür eine korrespondierende Verzahnung in seiner zentralen kreisförmigen Ausnehmung auf. Somit sind die der Planetenträger 26 und das Sonnerad 32 formschlüssig verbunden. Die Zentrierung erfolgt über die Zahnflanken. Die Passung zwischen den Verzahnungen sind als Spielpassung, Übergangspassung oder Presspassung ausführbar. Für besonders spielarme Ausführung ist auch eine abspannende Verbindung möglich.

Durch den verkürzten Kopfkreis im Teilbereich 35 entsteht ein axialer Anschlag 38 an dem der Planetenträger 26 mit einer abtriebseitigen Stirnfläche ansteht.

Das Sonnenrad 32 der zweiten Stufe 30 ist mit einem abtriebseitigen Endabschnitt durch ein Sonneradlager 33, welches vorzugsweise als Rillenkugellager ausgeführt ist, in einem weiteren Planetenträger 40 der zweiten Stufe 30 gelagert.

Der weitere Planetenträger 40 ist entweder wie in Figur 1 gezeigt als zweiwangiger Planetenträger ausgeführt oder in einer weiteren nicht gezeigten Ausführungsform entsprechend dem Planetenträger 26 der ersten Stufe 20 als einwangiger Planetenträger mit variablen Bolzen gefertigt.

Im weiteren Planetenträger 40 ist ein weiteres Planetenrad 41 mittels eines Bolzenlagers 47 auf einem weiteren Bolzen 49 gelagert. Der weitere Bolzen 49 ist in Ausnehmungen in Wangen des weiteren Planetenträgers 40 gehalten. Vorzugsweise sind als Bolzenlager 47 zwischen dem weiteren Bolzen 49 und dem weiteren Planetenrad 41 zwei Doppelzylinderrollenlager vorgesehen.

Eintriebsseitig ist der weitere Planetenträger 40 von einem Planetenträgerlager 43 in einer Zwischenwand des zentralen zylindermantelförmigen Gehäuseteils 12 gelagert.

Abtriebsseitig ist der weitere Planetenträger 40 entweder als Hohlwelle 42 oder als Vollwelle 46 ausgeformt. Die Hohlwelle 42 oder die Vollwelle 46 bilden eine einstückig mit dem weiteren Planetenträger 40 ausgebildete Abtriebswelle des Planetengetriebes 10.

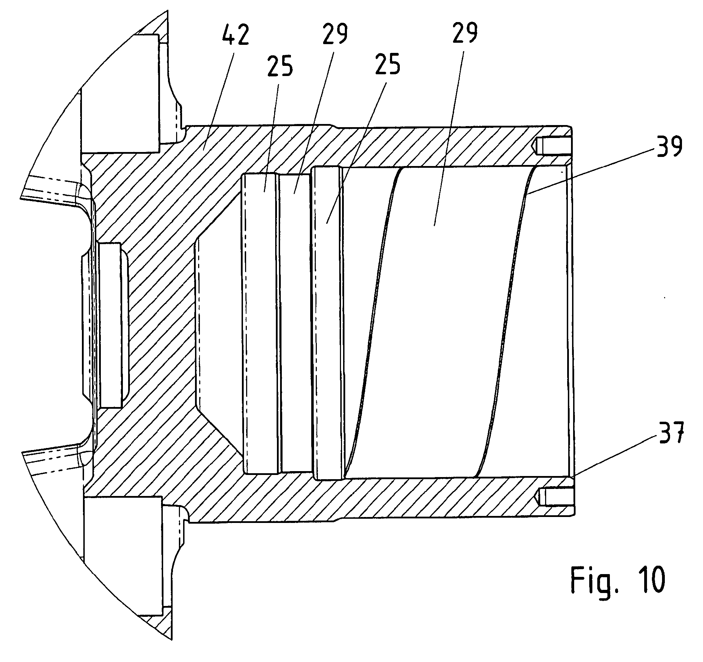

Figur 10 zeigt einen Teilschnitt durch den weiteren Planetenträger 40 mit der Abtriebswelle als Hohlwelle 42. Die Innenwand der Hohlwelle 42 bildet eine Zylindermantelfläche. In die Innenwand ist eine spiralförmige Nut 39 eingebracht.

Die Hohlwelle ist von der Abtriebsseite her durch Ausnehmungen 29 gebildet, welche vorzugsweis einen kreisförmigen Umfang aufweisen. Die Durchmesser der Ausnehmungen 29 werden von der Abtriebsseite zur Eintriebsseite des weiteren Planetenträgers 40 hin kleiner.

Zwischen je zwei Ausnehmungen 29 sind zylindermantelartige Freistiche 25 mit größerem Durchmesser als die benachbarten Ausnehmungen 29 angeordnet. Die Ausnehmungen 29 und die Freistiche 25 bilden ein Sackloch im weiteren Planetenträger 40 beziehungsweise dessen Abtriebswelle.

Die Spiralförmige Nut 39 ist nur in der abtriebsseitigsten Ausnehmung 29 eingebracht und läuft abtriebsseitig in einer Fase 37 an der Stirnfläche der Hohlwelle 42 aus. Die Fase 37 ist an der innenliegenden Kante der Stirnfläche angebracht.

Eine Antriebswelle lässt sich in die Hohlwelle einschieben. Durch die spiralförmig umlaufende Nut 39 wird der von der Antriebswelle in der Hohlwelle eingeschlossen Raum entlüftet. Die spiralförmige Nut lässt sich besonders einfach und kostengünstig in die Innenfläche der Hohlwelle durch einfaches Abziehen eines Werkezuges während einer Drehbewegung der Hohlwelle einbringen.

Die Ausführungsart der Hohlwelle 42 mit einer spiralförmigen Nut lässt sich in jeder beliebigen Hohlwelle, welche eine Sacklochartige Aufnahme für eine Antriebswelle aufweist, ausführen.

Die weiter innenliegenden Ausnehmungen 29 dienen zur Aufnehme eines Biegemomentes der Antriebswelle. Die abtriebsseitigste Ausnehmung 29 dient zur Drehmomentübertragung in Verbindung mit der die Hohlwelle 42 im Bereich der abtriebsseitigsten Ausnehmung 29 umgebenden Schrumpfscheibe 44.

Durch das Auslaufen der spiralförmig umlaufenden Nut 39 in der Fase 37 ist auch während des Betriebes des Planetengetriebes 10 eine Entlüftung gesichert. Somit führt eine Erwärmung des weiteren Planetenträgers 40 nicht zu einem herausdrücken der Antriebswelle aus der Hohlwelle 42.

Wie in den Figuren 1 und 2 gezeigt schaut die Vollwelle 46 oder Hohlwelle 42 mit einem weiteren Endabschnitt aus dem Abtriebsdeckel 18 hervor und ist über ein Abtriebslager 45 im Abtriebsdeckel 18 gelagert. Zwischen Vollwelle 46 oder Hohlwelle 42 und dem Abtriebsdeckel 18 ist zur Abdichtung ein Wellendichtring 70 angeordnet, vorzugsweise als doppelter Wellendichtring. Zur Befestigung einer anzutreibenden Vorrichtung umgibt eine Schrumpfscheibe 44 zumindest teilweise den weiteren Endabschnitt der Hohlwelle 42.

Zur Vermeidung von Verletzung ist eine zylindermantelförmige Abdeckung 48 am Abtriebsdeckel 18 drehfest befestigbar. Die zylindermantelförmige Abdeckung 48 ist vorzugsweise, insbesondere ausschließlich, aus Biegeteilen hergestellt, welche miteinander verschraubt sind.

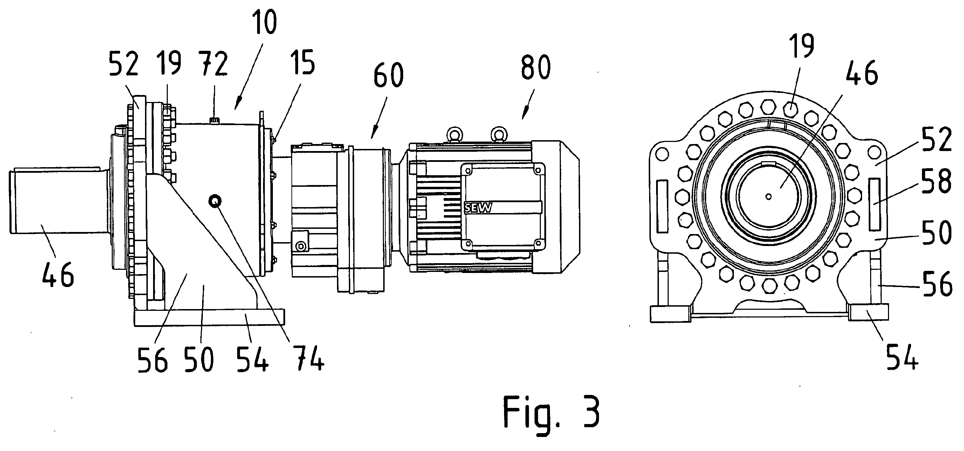

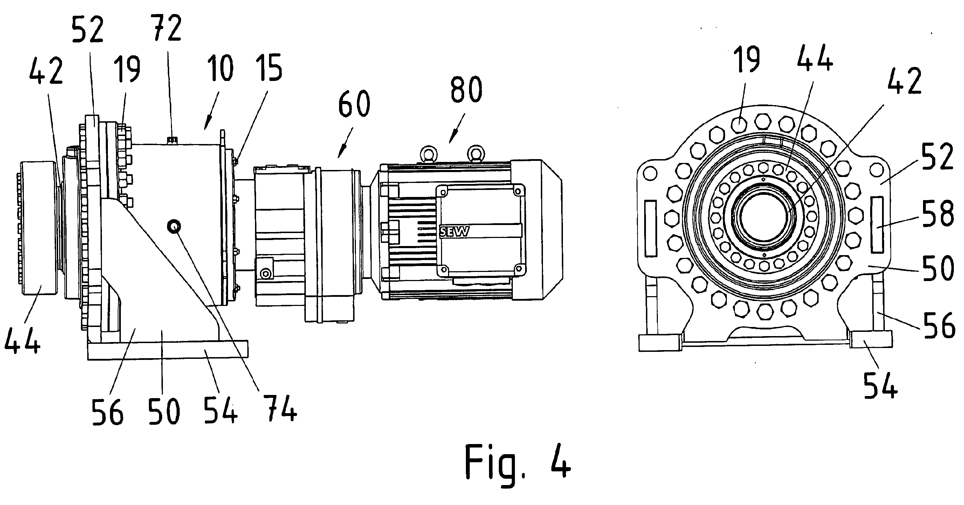

Figur 3 und Figur 4 zeigen je eine Ausführungsform, wobei an den Abtriebsdeckel 18 ein L-förmiger Fuß 50 angeschraubt ist. Der L-förmige Fuß weist einen annähernd ringförmiger Teilabschnitt 52 und einen viereckigen Rahmen 54 als Standfläche bzw. Befestigungsfläche auf. Der ringförmige Teilabschnitt 52 umfasst Ausstülpungen an denen der viereckige Rahmen 54 befestigt ist. Zusätzlich sind der annähernd ringförmiger Teilabschnitt 52 und der viereckiger Rahmen 54 über einen Winkel 56 miteinander verbunden. Ein Endbereich des Winkels 56 ragt durch ein viereckiges Langloch 58 einer Ausstülpung am annähernd ringförmigen Teilabschnitt 52 hindurch. Beide Teile sind vorzugsweise miteinander verschweißt. Dies erleichtert die Montage des L-förmigen Fußes 50.
Zusätzlich zeigen Figur 3 und Figur 4 ein an der Eintriebsseite des Planetengetriebes 10 angeschlossenes Stirnradgetriebe 60, welches wiederum an einen Motor 80 angeschlossen ist.

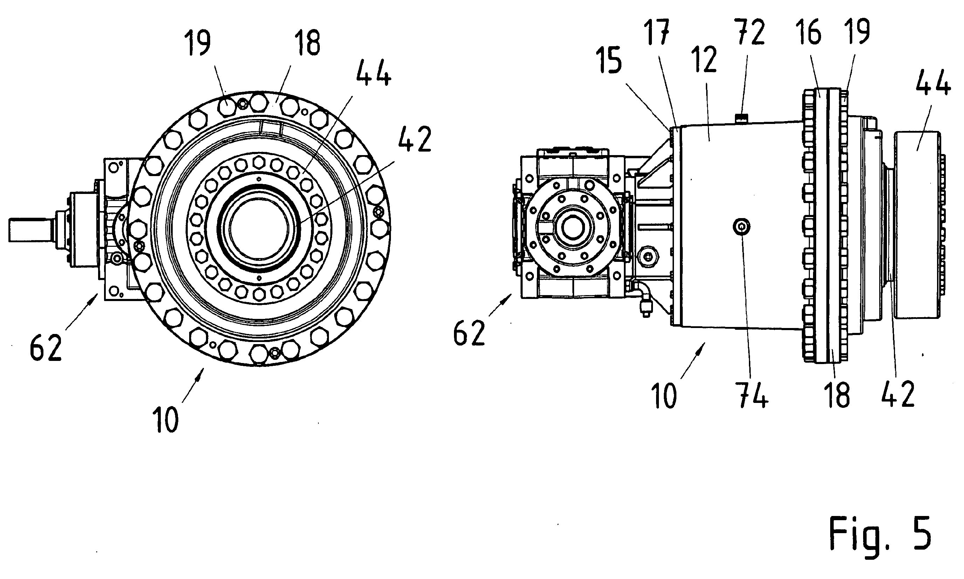

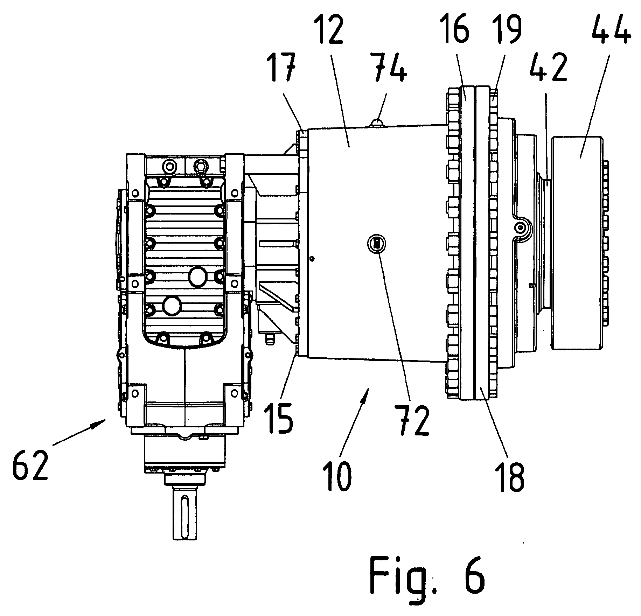

Figur 5 und Figur 6 zeigen eine Ausführungsform mit einem Kegelradgetriebe 70 als Vorgetriebe.

### Bezugszeichenliste

- 10: Planetengetriebe
- 12: zentrales zylindermantelförmiges Gehäuseteil
- 13: Anbauschraube
- 14: Bohrung in Stirnwand
- 15: Schraube
- 16: Flansch
- 17: eintriebsseitiger Flansch
- 18: Abtriebsdeckel
- 19: weitere Schraube
- 20: erste Stufe
- 21: Hohlrad für die erste Stufe
- 22: weiteres Sonnenrad
- 24: Bolzen
- 25: Freistich
- 26: Planetenträger
- 27: Planetenrad
- 28: Planetenradlager
- 29: kreisförmige Ausnehmung
- 30: zweite Stufe
- 31: Hohlrad für die zweite Stufe
- 32: Sonnenrad der zweiten Stufe
- 33: Sonnenradlager
- 34: Endbereich
- 35: Teilbereich
- 36: mittlerer Bereich
- 37: Fase
- 38: axialer Anschlag
- 39: spiralförmige Nut
- 40: weiterer Planetenträger
- 41: weiteres Planetenrad
- 42: Hohlwelle
- 43: Planetenträgerlager
- 44: Schrumpfscheibe
- 45: Abtriebslager
- 46: Vollwelle
- 47: Bolzenlager
- 48: zylindermantelförmige Abdeckung
- 49: weiterer Bolzen
- 50: L-förmiger Fuß
- 52: annähernd ringförmiger Teilabschnitt
- 54: viereckiger Rahmen
- 56: Winkel
- 58: viereckiges Langloch
- 60: Stirnradgetriebe
- 70: Wellendichtring
- 72: Entlüftung
- 74: Verschlussschraube
- 80: Motor
- 100: scheibenförmiger Grundkörper
- 101: zentrale kreisförmige Ausnehmung
- 102: Grundfläche
- 104: Anschlagsfläche
- 105: Sicherungsnut

## Patentansprüche

1. Gussteil für einen einstückigen Planetenträger,
**dadurch gekennzeichnet, dass**
das Gussteil einen Grundkörper umfasst, aus welchem Rohbolzen hervorstehen,
wobei die Rohbolzen jeweils eine Form aufweisen, aus welcher jeweils ein Bolzen für ein Planetenrad in verschiedenen Positionen, **also** in verschiedenen Radialabständen zu einer Drehachse des Planetenträgers, auf dem Grundkörper fertigbar ist,
**wobei der Grundkörper scheibenförmig ausgeformt ist**
**wobei die Rohbolzen annähernd senkrecht oder senkrecht vom Grundkörper abstehen**
**und wobei die Rohbolzen und die Bolzen parallel zur Drehachse des Planetenträgers ausgerichtet sind**
**und die Rohbolzen jeweils aus axialer Blickrichtung eine in radialer Richtung ovalförmig verlängerte Grundfläche 102 am Ansatz zum Grundkörper zeigen.**

2. Planetenträger für ein Planetengetriebe, **wobei der Planetenträger aus einem Gussteil nach Anspruch 1 gefertigt ist,**
**dadurch gekennzeichnet, dass**
**das Gussteil für einen einstückigen Planetenträger vorgesehen ist.**

3. Planetenträger nach Anspruch 2,
**dadurch gekennzeichnet, dass**
der Grundkörper eine zentrale kreisförmige Öffnung mit einer Innenverzahnung aufweist und um die kreisförmige Öffnung verdickt ausgeführt ist,
und der Planetenträger annähernd in den Ecken des Grundkörpers senkrecht zum Grundkörper drei Bolzen für Planetenräder aufweist, welche aus den Rohbolzen in unterschiedlichen Abständen zum Zentrum der kreisförmigen Ausnehmung herstellbar sind.

4. **Rohbauteil für einen** Planetenträger nach Anspruch 3 für ein Planetengetriebe,
wobei der Planetenträger einstückig ausgeführt ist und Bolzen für Planetenräder an einem Grundkörper abstehen,
**dadurch gekennzeichnet, dass**
die Bolzen in unterschiedlichen radialen Abständen zu einer Drehachse des Grundkörpers fertigbar sind,
wobei bei einem minimalen Abstand des Bolzens zur Drehachse die Differenz aus einer größten radialen Ausdehnung des Grundkörpers und dem größten radialen Abstand des Bolzens zum Zentrum des Grundkörpers größer ist als der halbe Radius des Bolzens vorzugsweise als der Radius des Bolzens.

5. Verfahren zur Herstellung eines Planetenträgers,
**dadurch gekennzeichnet, dass**
aus einem in radialer Richtung zu einer Drehachse des Planetenträgers längsgestrecktem Rohbolzen, welcher sich in axialer Richtung erstreckt, ein Bolzen für ein Planetenrad spanabtragend gefertigt wird.

6. Verfahren nach Anspruch 5,
**dadurch gekennzeichnet, dass**
ein radialer Abstand des Bolzens zur Drehachse in Übereinstimmung mit dem Raumbereich des längsgestreckten Rohbolzens gewählt wird.

7. Verfahren nach Anspruch 6 oder 5,
**dadurch gekennzeichnet, dass**
in eine Zylindermantelfläche des Planetenträgers, welche eine zur Drehachse konzentrische Öffnung, insbesondere kreisförmige Öffnung, umgibt, eine Innenverzahnung eingebracht wird.

## Claims

1. Cast part for a one-piece planet carrier,
**characterised in that**
the cast part comprises a base body, from which unfinished bolts protrude,
wherein the unfinished bolts each have a form from which each bolt is producible for a planet wheel in different positions, that is to say at different radial distances from an axis of rotation of the planet carrier, on the base body,
wherein the base body is of disc-shaped form
wherein the unfinished bolts protrude approximately perpendicularly or perpendicularly from the base body
and wherein the unfinished bolts and the bolts are oriented parallel to the axis of rotation of the planet carrier
and the unfinished bolts each have, viewed from the axial direction, a base surface 102, extended in an oval shape in the radial direction, at the attachment to the base body.

2. Planet carrier for a planetary gear, wherein the planet carrier is produced from a cast part according to claim 1,
**characterised in that**
the cast part is provided for a one-piece planet carrier.

3. Planet carrier according to claim 2,
**characterised in that**
the base body has a central circular opening with an inner toothing and is of thickened design around the circular opening,
and the planet carrier has, approximately in the corners of the base body perpendicularly to the base body, three bolts for planet wheels which are producible from the unfinished bolts at different distances from the centre of the circular opening.

4. Unfinished component for a planet carrier according to claim 3 for a planetary gear,
wherein the planet carrier is of one-piece design and bolts for planet wheels protrude on a base body,
**characterised in that**
the bolts are producible at different radial distances from an axis of rotation of the base body,
wherein, at a minimum distance of the bolt from the axis of rotation, the difference of a greatest radial extent of the base body and the greatest radial distance of the bolt from the centre of the base body is greater than half the radius of the bolt, preferably than the radius of the bolt.

5. Method for producing a planet carrier,
**characterised in that**
a bolt for a planet wheel is produced by machining from an unfinished bolt which is elongated in the radial direction with respect to an axis of rotation of the planet carrier and which extends in the axial direction.

6. Method according to claim 5,
**characterised in that**
a radial distance of the bolt from the axis of rotation is chosen in accordance with the spatial region of the elongated unfinished bolt.

7. Method according to claim 6 or 5,
**characterised in that**
an inner toothing is made in a cylinder lateral surface of the planet carrier, which surface surrounds an opening concentric with respect to the axis of rotation, in particular circular opening.

## Revendications

1. Pièce coulée dédiée à un porte-satellites monobloc,
**caractérisée par le fait que**
ladite pièce coulée inclut un corps de base au-delà duquel des tourillons bruts font saillie, lesdits tourillons bruts étant respectivement dotés d'une forme à partir de laquelle un tourillon respectif, affecté à un satellite, peut être ouvragé sur ledit corps de base en différents emplacements, c'est-à-dire avec espacements radiaux différents par rapport à un axe de rotation du porte-satellites,
ledit corps de base étant de configuration discoïdale,
lesdits tourillons bruts dépassant à peu près perpendiculairement, ou perpendiculairement au-delà dudit corps de base,
les tourillons bruts, et les tourillons, étant orientés parallèlement audit axe de rotation du porte-satellites,
et lesdits tourillons bruts étant respectivement pourvus, observés dans la direction axiale, d'une surface de base (102) à prolongement ovalisé, dans le sens radial, au niveau du rattachement audit corps de base.

2. Porte-satellites destiné à un engrenage planétaire, ledit porte-satellites étant fabriqué à partir d'une pièce coulée conforme à la revendication 1,
**caractérisé par le fait que**
la pièce coulée est prévue pour un porte-satellites monobloc.

3. Porte-satellites selon la revendication 2,
**caractérisé par le fait que**
le corps de base comporte un orifice circulaire central muni d'une denture intérieure, et est de réalisation épaissie autour dudit orifice circulaire,
et ledit porte-satellites présente approximativement dans les coins du corps de base, perpendiculairement audit corps de base, trois tourillons qui sont affectés à des satellites et peuvent être ouvragés, à partir des tourillons bruts, avec espacements différents par rapport au centre de l'évidement circulaire.

4. Pièce structurelle brute dédiée à un porte-satellites conforme à la revendication 3 et destiné à un engrenage planétaire,
sachant que ledit porte-satellites est de réalisation monobloc et que des tourillons, affectés à des satellites, dépassent au-delà d'un corps de base,
**caractérisée par le fait que**
les tourillons peuvent être ouvragés avec espacements radiaux différents par rapport à un axe de rotation du corps de base,
sachant que, dans le cas d'un espacement minimal du tourillon par rapport audit axe de rotation, la différence, entre une étendue radiale maximale du corps de base et l'espacement radial maximal dudit tourillon par rapport au centre dudit corps de base, est supérieure à la moitié du rayon dudit tourillon, de préférence audit rayon du tourillon.

5. Procédé de fabrication d'un porte-satellites,
**caractérisé par le fait**
**qu'**un tourillon affecté à un satellite est ouvragé, par enlèvement de copeaux, à partir d'un tourillon brut qui présente un tracé axial et s'étend en longueur, dans le sens radial, par rapport à un axe de rotation dudit porte-satellites.

6. Procédé selon la revendication 5,
**caractérisé par le fait**
**qu'**un espacement radial du tourillon, par rapport à l'axe de rotation, est choisi en concordance avec la zone spatiale du tourillon brut s'étendant en longueur.

7. Procédé selon la revendication 6 ou 5,
**caractérisé par le fait**
**qu'**une denture intérieure est ménagée dans une surface d'enveloppe cylindrique du porte-satellites qui entoure un orifice concentrique à l'axe de rotation, en particulier un orifice circulaire.
